# EUROPÄISCHE PATENTANMELDUNG

(11) **EP 3 299 688 A1**
(43) Veröffentlichungstag der Anmeldung: **28.03.2018**
(21) Anmeldenummer: 16189833.3
(22) Anmeldetag: 21.09.2016
(51) Int. Cl.: F16L 5/02, F16L 5/04, H02G 3/04, H02G 3/22, A62C 2/06

(54) **BRANDSCHUTZBAUGRUPPE SOWIE VERFAHREN ZUR HERSTELLUNG EINER BRANDGESCHÜTZTEN LEITUNGSDURCHFÜHRUNG**

(71) Anmelder: HILTI Aktiengesellschaft, 9494 Schaan (LI)
(72) Erfinder: Förg, Christian, 86862 Lamerdingen (DE)
(74) Vertreter: Hilti Aktiengesellschaft Corporate Intellectual Property

(57) **Zusammenfassung**

Eine Brandschutzbaugruppe (10) für eine Leitungsdurchführung (12) durch eine Wand (14) ist beschrieben, mit wenigstens einem Befestigungselement (32), über das die Brandschutzbaugruppe (10) an der Wand (14) befestigbar ist, und einem flexiblen und gasdichten Gewebeabschnitt (24), an dem intumeszierendes Material (48) vorgesehen ist. Der Gewebeabschnitt (24) bildet im montierten Zustand einen Schlauch, der die durch die Wand (14) geführte Leitung (16) umschließen kann. Das wenigstens eine Befestigungselement (32) ist mit einer Außenseite (39) des Gewebeabschnitts (24) direkt gekoppelt und an der Innenseite (46) des Gewebeabschnitts (24) ist das intumeszierende Material (48) vorgesehen. Ferner ist ein Verfahren zur Herstellung einer brandgeschützten Leitungsdurchführung (12) beschrieben.

## Beschreibung

Die Erfindung betrifft eine Brandschutzbaugruppe für eine Leitungsdurchführung durch eine Wand sowie ein Verfahren zur Herstellung einer brandgeschützten Leitungsdurchführung durch eine Wand.

Aus dem Stand der Technik sind Brandschutzbaugruppen für eine Leitungsdurchführung durch eine Wand bekannt, bei denen zunächst eine Öffnung in eine Wand, beispielsweise einen Boden, eine Decke oder eine Brandwand, eingebracht wird, um eine oder mehrere Leitung(en) durch die entsprechende Wand zu verlegen. Unter einer Leitung ist ein Kabel, ein Rohr oder Ähnliches zu verstehen.

Da die Leitung die Öffnung in der Wand nicht vollständig schließt, wird im Stand der Technik üblicherweise ein flexibles oder starres Brandschutzmaterial verwendet, um die Öffnung im Bereich der Wand, durch die die Leitung verläuft, vollständig zu schließen. Hierzu werden unter anderem Mörtel, Mörtelschott, Schott aus intumeszierenden Baustoffen (sogenannte Brandschutzsteine), PU-Steine, Acryl-Dichtmittel und/oder Mineralwolle in Kombination mit Sprühbeschichtungen verwendet.

Die aus dem Stand der Technik bekannten Lösungen versuchen demnach, die Öffnung in der Ebene der Leitungsdurchführung wieder zu verschließen, was jedoch mit verschiedenen Nachteilen verbunden ist.

Beispielsweise ist es nicht mehr möglich, eine zusätzliche Leitung zu verlegen, wenn die Öffnung einmal mit dem entsprechenden Material wieder aufgefüllt worden ist, nachdem eine erste Leitung bzw. mehrere Leitungen durch die Leitungsdurchführung geführt worden sind. Hierzu müsste das in die Öffnung eingebrachte Material zumindest teilweise wieder entfernt werden, um Platz für die neu zu verlegende Leitung zu schaffen. Nachdem die neue Leitung verlegt worden ist, muss die neu geschaffene Öffnung wieder vollständig geschlossen werden, um die geforderten Brandschutzeigenschaften sicherzustellen. Dies ist jedoch mit einem hohen Aufwand verbunden.

Darüber hinaus ist es problematisch, wenn auf die durch die Wand geführte(n) Leitung(en) mechanische Belastungen wirken, die zu einer Bewegung der Leitung(en) führen, beispielsweise bei einem Erdbeben. Die mechanischen Bewegungen sind durch die Flexibilität des Materials begrenzt, mit dem die Öffnung aufgefüllt worden ist. Insbesondere sind Längenausdehnungen der Leitung(en) im Bereich des Materials nicht möglich, da Fixpunkte gesetzt worden sind, die verhindern, dass das die Öffnung auffüllende Material im Laufe der Zeit aus der Öffnung wandert, wodurch die Brandschutzeigenschaften nicht mehr gewährleistet wären.

Des Weiteren überträgt das die Öffnung verschließende Material die Schwingungen von der Leitung auf die Wand, da die Leitung in direktem Kontakt mit dem Material ist. Dies tritt insbesondere dann auf, wenn das die Öffnung auffüllende Material ein hartes Material ist. Zudem findet dann eine Körperschallübertragung statt, die nicht wünschenswert ist.

Ferner lassen sich die aus dem Stand der Technik bekannten Lösungen bei geringen Wandstärken weiniger gut verwenden, da das die Öffnung auffüllende Material keinen Halt in der Öffnung hätte bzw. Probleme bei der Temperaturleitung auftreten können. Dementsprechend muss die Wandstärke im Bereich der Leitungsdurchführung verstärkt bzw. aufgedoppelt werden, was einen zusätzlichen Montageaufwand bzw. Herstellungsaufwand bei der Leitungsdurchführung erfordert.

Die Aufgabe der Erfindung ist es, eine Leitungsdurchführung durch eine Wand in einfacher und kostengünstiger Weise bereitzustellen, die flexibel einsetzbar ist.

Die Aufgabe wird erfindungsgemäß durch eine Brandschutzbaugruppe für eine Leitungsdurchführung durch eine Wand gelöst, mit wenigstens einem Befestigungselement, über das die Brandschutzbaugruppe an der Wand befestigbar ist, und einem flexiblen und gasdichten Gewebeabschnitt, an dem intumeszierendes Material vorgesehen ist, wobei der Gewebeabschnitt im montierten Zustand einen Schlauch bildet, der die durch die Wand geführte Leitung umschließen kann, und wobei das wenigstens eine Befestigungselement mit einer Außenseite des Gewebeabschnitts direkt gekoppelt ist und an der Innenseite des Gewebeabschnitts das intumeszierende Material vorgesehen ist.

Der Grundgedanke der Erfindung ist es, einen vereinfachten Aufbau der Brandschutzbaugruppe für eine Leitungsdurchführung bereitzustellen, die wenige Einzelteile aufweist, sodass die Brandschutzbaugruppe leichter herzustellen ist. Darüber hinaus ist die Brandschutzbaugruppe flexibel einsetzbar, da der Gewebeabschnitt das intumeszierende Material aufweist und gleichzeitig einen Schlauch bildet, durch den die durch die Wand geführte Leitung geführt wird. Dementsprechend ist es möglich, auch nachträglich noch Leitungen durch die Öffnung der Wand zu führen, da diese lediglich durch den schlauchförmigen Gewebeabschnitt geführt werden müssen. Die Körperschallübertragung wird unter anderem dadurch zumindest reduziert, dass der Gewebeabschnitt aus einem flexiblen Material besteht, sodass die Bewegungen der Leitung nicht auf die Wand übertragen werden bzw. vom Gewebeabschnitt zumindest teilweise aufgenommen werden. Da der Gewebeabschnitt gasdicht ist, sind die für eine Brandschutzbaugruppe erforderlichen Brandschutzeigenschaften wie Dichtigkeit ebenfalls gegeben. Die Brandschutzbaugruppe lässt sich in einfacher Weise über das Befestigungselement an der Wand im Bereich der Leitungsdurchführung befestigen.

Ein Aspekt sieht vor, dass der Gewebeabschnitt eine Matte ist, deren entgegengesetzte Randabschnitte zur Bildung des Schlauchs übereinandergelegt und aneinander befestigt sind. Demnach kann der Gewebeabschnitt von einer Rolle abgerollt werden und auf die entsprechenden Maße zugeschnitten werden, die für die Leitungsdurchführung benötigen werden. Hierdurch ist eine flexibel einsetzbare Brandschutzbaugruppe geschaffen, da diese an die Erfordernisse bei der Herstellung der Brandschutzbaugruppe bzw. der Leitungsdurchführung angepasst werden kann. Aufgrund der übereinandergelegten und aneinander befestigten Randabschnitte ist sichergestellt, dass die erforderliche Gasdichtigkeit gegeben ist, insbesondere entlang der Randabschnitte.

Ein weiterer Aspekt sieht vor, dass das wenigstens eine Befestigungselement ein insbesondere umlaufendes Band mit daran angeordneten Befestigungslaschen oder ein Befestigungshaken ist, insbesondere wobei an dem Band auf dessen Innenseite intumeszierendes Material aufgebracht ist. Das als Befestigungshaken ausgebildete Befestigungselement kann aus einem Metall bestehen, insbesondere einem Blech, das einen Abstützabschnitt und einen sich etwa senkrecht hierzu erstreckenden Befestigungsabschnitt aufweist, also rechtwinklig ausgebildet ist. Der Befestigungsabschnitt dient dabei zur Befestigung an der Wand, wohingegen der Abstützabschnitt den Gewebeabschnitt stützt. Von den Befestigungshaken können mehrere über den Umfang des schlauchförmigen Gewebeabschnitts verteilt angeordnet sein, wodurch eine im Wesentlichen gleichmäßige Krafteinleitung erfolgt. Das umlaufende Band stützt den Gewebeabschnitt in einem Wandbefestigungsbereich des Gewebeabschnitts ab, wodurch dieser aufgrund des steiferen Bands des Befestigungselements seine Form im Bereich der Leitungsdurchführung beibehält.

Insbesondere sind bzw. ist das Befestigungselement und/oder das intumeszierende Material an einem ersten, wandseitigen Ende des Gewebeabschnitts angeordnet. Demnach kann die Brandschutzbaugruppe über das Befestigungselement an der Wand befestigt werden. Darüber hinaus stellt dies sicher, dass das intumeszierende Material im Brandfall die Öffnung in der Wand verschließt, durch die die Leitung geführt ist, da sich das intumeszierende Material bei hohen Temperaturen aufbläht. Hierdurch wird der Übertritt von toxischen Gasen und/oder Feuer wirkungsvoll verhindert. Am ersten, wandseitigen Ende ist insbesondere der Wandbefestigungsbereich vorgesehen.

Gemäß einem weiteren Aspekt ist an einem zweiten, von der Wand entfernten Ende des Gewebeabschnitts ein Kompriband vorgesehen, über das der Gewebeabschnitt zur Leitung abgedichtet ist. Das Kompriband stellt sicher, dass die gesamte Brandschutzbaugruppe auch auf der wandabweisenden Seite gasdicht ist, da die Leitungen auch am zweiten, von der Wand entfernten Ende des Gewebeabschnitts abgedichtet sind. Das Kompriband umfasst üblicherweise einen Schaumstoff, der in einer Folie eingeschweißt ist, die unter vorgegebenen Bedingungen aufreißt. Beispielsweise kann die Folie so ausgebildet sein, dass sie bei einem Anstieg der Temperatur an Stabilität verliert, sodass sie aufgrund der Kraft des komprimierten Schaumstoffs reißt, wodurch dieser die durch die Brandschutzbaugruppe geführten Leitungen am zweiten Ende im Brandfall vollständig abdichtet. Es ist auch vorstellbar, dass die Folie nach der Montage manuell geöffnet bzw. aufgerissen werden kann.

Der Gewebeabschnitt kann ein Gewebematerial aufweisen, das Aramid, Glasfaser, Silicafaser, Keramikfaser und/oder Aluminiumfolie umfasst, insbesondere wobei das Gewebematerial mit einem intumeszierenden Material zumindest teilweise beschichtet ist. Die Materialien eignen sich aufgrund ihrer hohen Temperaturstabilität für den Gewebeabschnitt der Wandschutzbaugruppe, da sie zudem feuerbeständig und flexibel sind. Der Gewebeabschnitt kann zudem mit einem Polyurethan, Silikon, einem PTFE oder einem ähnlichen Material beschichtet sein, um die erforderliche Gasdichtigkeit bereitzustellen.

Insbesondere ist das intumeszierende Material in parallel zueinander verlaufenden Streifen angeordnet, die sich über die gesamte Innenseite eines Wandbefestigungsbereichs des Gewebeabschnitts erstrecken und vorzugsweise in Längsrichtung der Brandschutzbaugruppe verlaufen. Die streifenförmige Anordnung des intumeszierenden Materials stellt sicher, dass der Gewebeabschnitt ein besseres Falt- und Knickverhalten aufweist, sodass dieses einfacher an die örtlichen Gegebenheiten angepasst werden kann. Zudem lässt sich der mattenförmige Gewebeabschnitt so einfacher als Rollenware bereitstellen. Das intumeszierende Material kann sich auch in Längsrichtung der Brandschutzbaugruppe über den gesamten Gewebeabschnitt erstrecken, wobei insbesondere im Wandbefestigungsbereich das intumeszierende Material vorgesehen ist, sodass dieses die Öffnung in der Wand im Brandfall verschließt, wenn es sich aufgrund der steigenden Temperaturen ausdehnt.

Ferner wird die Aufgabe erfindungsgemäß durch ein Verfahren zur Herstellung einer brandgeschützten Leitungsdurchführung durch eine Wand gelöst, insbesondere mit einer Brandschutzbaugruppe der zuvor genannten Art, wobei ein mattenförmiger Gewebeabschnitt bereitgestellt wird, der auf seiner Innenseite ein intumeszierendes Material aufweist. Zudem wird ein Befestigungssystem bereitgestellt. Der Gewebeabschnitt wird unter Bildung zwei entgegengesetzter Randabschnitte abgelängt, wobei der Gewebeabschnitt mittels des Befestigungssystems an einem Randbereich einer Öffnung in einer Wand befestigt wird, wobei das Befestigungssystem an der Außenseite eines Wandbefestigungsbereichs des Gewebeabschnitts angreift. Zudem wird ein Schlauch aus dem Gewebeabschnitt durch Aneinanderlegen und Verbinden der entgegengesetzten Randabschnitte gebildet.

Mit dem Verfahren wird somit eine Brandschutzbaugruppe bereitgestellt, die einen schlauchförmigen Gewebeabschnitt aufweist, durch den die Leitung(en) geführt wird bzw. werden, sodass es in einfacher Weise möglich ist, nachträglich eine weitere Leitung hinzuzufügen. Der Gewerbeabschnitt wird an der Wand im Bereich der Leitungsdurchführung befestigt, sodass die Brandschutzbaugruppe in einfacher Weise mit der Wand gekoppelt wird. Ferner ergeben sich die zuvor genannten Vorteile der Brandschutzbaugruppe.

Ein Aspekt sieht vor, dass die Randabschnitte miteinander verbunden werden, indem diese zunächst umsäumt und anschließend fixiert werden. Das Umsäumen und anschließende Fixieren stellt eine feste Verbindung der Randabschnitte sicher, sodass der Schlauch stabil ist. Des Weiteren wird hierdurch die Gasdichtigkeit in diesem Verbindungsbereich zwischen den abgelängten Randabschnitten gewährleistet.

Ein weiterer Aspekt sieht vor, dass die umsäumten Randabschnitte über wenigstens ein mechanisches Fixierungselement oder eine chemische Verbindung fixiert werden, insbesondere miteinander verklebt werden. Bei den mechanischen Fixierungselementen kann es sich um Klammern handeln, beispielsweise Metallklammern bzw. Stahlklammern, die die umsäumten Randabschnitte umgreifen und so miteinander koppeln. Die chemische Verbindung stellt in analoger Weise zu den mechanischen Fixierungselementen sicher, dass die Randabschnitte auch unter mechanischer Belastung miteinander verbunden bleiben, sodass der Schlauch sich nicht öffnet, wenn er beispielsweise mechanisch belastet wird. Die mechanischen Fixierungselemente bzw. die chemische Verbindung stellen somit eine zusätzliche Sicherung dar, um die Gasdichtigkeit im Verbindungsbereich der beiden Randabschnitte dauerhaft zu gewährleisten.

Gemäß einem Aspekt werden zunächst nur die Randabschnitte im Wandbefestigungsbereich aneinander befestigt. Die die Leitungsdurchführung bereitstellende Brandschutzbaugruppe wird also zunächst im Bereich des ersten, wandseitigen Endes des Gewebeabschnitts miteinander verschlossen, um dem Gewebeabschnitt zunächst die benötigte Stabilität zu geben. Hierdurch entsteht zunächst ein ringförmig geschlossener Schlauchabschnitt der Brandschutzbaugruppe, insbesondere des Gewebeabschnitts.

Ein weiterer Aspekt sieht vor, dass der Gewebeabschnitt im gefalteten Zustand vorliegt, wobei der Gewebeabschnitt entfaltet wird, nachdem zumindest die Randabschnitte im Wandbefestigungsbereich aneinander befestigt worden sind. Aufgrund der vorherigen Befestigung der Randabschnitte im Wandbefestigungsbereich ist sichergestellt, dass beim Entfalten des gefalteten Gewebeabschnitts dieser seine Schlauchform im Wesentlichen beibehält. Nachdem der Gewebeabschnitt aus seinem gefalteten Zustand entfaltet worden ist, können die Randabschnitte über die gesamte Längsrichtung des Gewebeabschnitts miteinander gekoppelt werden, also die Richtung, entlang der sich die Leitung erstreckt. Da der Gewebeabschnitt im gefalteten Zustand vorliegt, kann dieser in kompakter Weise transportiert werden, was den Montage- und Transportaufwand deutlich verringert.

Ferner kann zumindest der Gewebeabschnitt zunächst von einer Rolle abgerollt werden. Bei dem Gewebeabschnitt handelt es sich somit um Rollenmaterial, das individuell an die entsprechenden Anforderungen vor Ort angepasst werden kann. Hierzu wird der Gewebeabschnitt von der Rolle abgerollt und auf die gewünschten Maße abgelängt, die die Leitungsdurchführung durch die Wand erfordert. Es ist somit eine flexible Möglichkeit geschaffen, die Leitungsdurchführung individuell an die Gegebenheiten vor Ort anzupassen.

Ein weiterer Aspekt sieht vor, dass der Gewebeabschnitt mit der Leitung verbunden wird, insbesondere über eine Verschnürung wie einen Draht, ein Klebeband wie ein Glasfaserfilamentklebeband oder ein Spannband. Die Verbindung des Gewebeabschnitts mit der Leitung findet an einem zweiten, von der Wand entfernten Ende des Gewebeabschnitts statt, sodass der Gewebeabschnitt über die gesamte Längsrichtung der Brandschutzbaugruppe bzw. der Leitungsdurchführung die Leitung schlauchförmig umgibt, sodass die relative Position beibehalten wird. Insbesondere wird so eine gasdichte schlauchförmige Umhüllung der Leitung geschaffen, sodass im Brandfall keine toxischen Gase und/oder Feuer durch die Leitungsdurchführung von einem Raum zu einem durch die Wand getrennten Raum übertreten können.

Alternativ kann ein Kompriband verwendet werden, um den Gewebeabschnitt mit der Leitung in abdichtender Weise zu verbinden. Das Kompriband stellt insbesondere im Brandfall eine abdichtende Funktion am zweiten Ende sicher.

Insbesondere wird zunächst eine Öffnung in die Wand eingebracht, durch die die Leitung geführt werden soll, wobei die Öffnung materialfrei bleibt. Dementsprechend wird die Öffnung bei der Herstellung der Leitungsdurchführung nicht mit einem Brandschutzmaterial oder einem anderen Material aufgefüllt, um die Öffnung wieder zu verschließen, wie dies im Stand der Technik der Fall ist. Die geforderten Brandschutzeigenschaften werden über die die Leitung(en) umhüllende Brandschutzbaugruppe bereitgestellt. Eine weitere Leitung kann in einfacher Weise hinzugefügt werden, da die schlauchförmige Brandschutzbaugruppe, insbesondere der Gewebeabschnitt, einen Freiraum zu der bzw. den verlegten Leitung(en) aufweist.

Da der Gewebeabschnitt die Leitung(en) schlauchförmig umgibt, kann bzw. können sich die Leitung(en) auch in Längsrichtung relativ zur Brandschutzbaugruppe bewegen.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Schnittdarstellung durch eine erfindungsgemäße Brandschutzbaugruppe einer Leitungsdurchführung,
- Figur 2 eine schematische Schnittdarstellung eines bei der erfindungsgemäßen Brandschutzbaugruppe verwendeten Gewebeabschnitts,
- Figur 3 eine Brandschutzbaugruppe bei der Herstellung einer brandgeschützten Leitungsdurchführung nach einem ersten Verfahrensschritt gemäß einem erfindungsgemäßen Verfahren,
- Figur 4 die Brandschutzbaugruppe aus Figur 3 nach einem zweiten Verfahrensschritt,
- Figur 5 die Brandschutzbaugruppe aus den Figuren 3 und 4 nach einem dritten Verfahrensschritt,
- Figur 6 die mit dem erfindungsgemäßen Verfahren hergestellte Leitungsdurchführung mit einer erfindungsgemäßen Brandschutzbaugruppe,
- Figur 7 eine alternative Ausführung des Befestigungselements, das bei der erfindungsgemäßen Brandschutzbaugruppe verwendet wird,
- Figur 8 eine schematische Schnittdarstellung durch einen bei der erfindungsgemäßen Brandschutzbaugruppe alternativ verwendbaren Gewebeabschnitt, und
- Figur 9 eine weitere alternative Ausführungsform des Gewebeabschnitts in einer schematischen Schnittdarstellung.

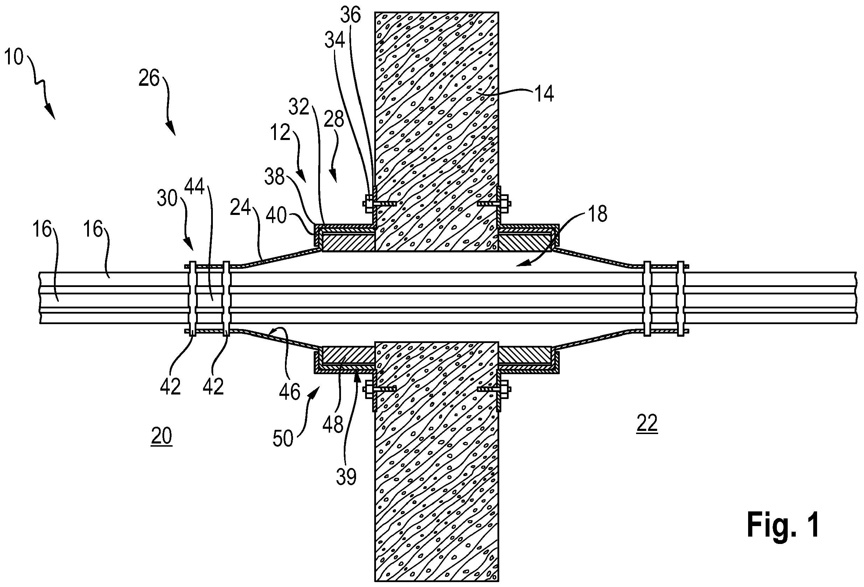

In Figur 1 ist eine Brandschutzbaugruppe 10 für eine Leitungsdurchführung 12 durch eine Wand 14 gezeigt, mit der der erforderliche Brandschutz in einem Gebäude sichergestellt wird. Die Brandschutzbaugruppe 10 stellt dabei die geforderten Brandschutzeigenschaften wie Gasdichtigkeit, Feuerbeständigkeit und intumeszierende Eigenschaften bereit, wie nachfolgend noch erläutert wird.

Mit der Leitungsdurchführung 12 können Leitungen 16 durch eine Öffnung 18 in der Wand 14 von einem Raum 20 zu einem anderen, benachbarten Raum 22 geführt werden, die von der Wand 14 getrennt sind. Bei der Wand 14 kann es sich um eine Brandwand, eine Decke oder einen Boden handeln. Unter einer Leitung 16 ist ein Kabel, ein Rohr oder ein ähnlicher Gegenstand zu verstehen.

Die Brandschutzbaugruppe 10 der Leitungsdurchführung 12 umfasst in der gezeigten Ausführungsform einen Gewebeabschnitt 24 sowie ein Befestigungssystem 26, über das der Gewebeabschnitt 24 mit der Wand 14 an einem ersten, wandseitigen Ende 28 und mit den Leitungen 16 an einem zweiten, von der Wand entfernten Ende 30 verbunden ist.

Hierzu umfasst das Befestigungssystem 26 zumindest ein Befestigungselement 32, welches in der gezeigten Ausführungsform als ein Befestigungshaken ausgebildet ist, der mit der Wand 14 über ein Fixierungsmittel 34 wie eine Schraube oder einen Bolzen gekoppelt ist.

Das Befestigungselement 32 weist einen Befestigungsabschnitt 36 auf, durch den sich das Fixierungsmittel 34 erstreckt. Hierzu hat der Befestigungsabschnitt 36 eine Öffnung, vorzugsweise in Form eines Langlochs, wodurch die Positionierung des Fixierungsmittels 34 erleichtert ist. Ferner umfasst das Befestigungselement 32 einen Abstützungsabschnitt 38, über den der Gewebeabschnitt 24 durch das Befestigungselement 32 gestützt wird.

In der gezeigten Ausführungsform ist der Abstützungsabschnitt 38 mit einer Abkantung 40 versehen, sodass der Abstützungsabschnitt 38 im Wesentlichen rechtwinklig ausgebildet ist. Der Abstützungsabschnitt 38 ist zudem mit dem Gewebeabschnitt 24 gekoppelt.

Über den Abstützungsabschnitt 38 ist das Befestigungselement 32 an einer Außenseite 39 des Gewebeabschnitts 24 angeordnet. Beispielsweise weisen die Befestigungselemente 32, die als Befestigungshaken ausgebildet sind, scharfkantige Spitzen auf, die in den Gewebeabschnitt 24 eingreifen, sodass diese unverlierbar miteinander gekoppelt sind. Die scharfkantigen Spitzen können hierzu insbesondere als eine Art Widerhaken ausgebildet sein.

Alternativ ist das Befestigungselement 32 über den Abstützungsabschnitt 38 chemisch mit der Außenseite 39 des Gewebeabschnitts 24 gekoppelt, insbesondere daran geklebt.

Ergänzend oder alternativ ist der Gewebeabschnitt 24 lediglich klemmend vom Abstützungsabschnitt 38 gehalten, insbesondere der Abkantung 40.

Der Befestigungsabschnitt 36 des Befestigungselements 32 ist parallel zur Abkantung 40 ausgerichtet, sodass der Befestigungsabschnitt 36 im Wesentlichen flächig an der Wand 14 anliegt.

Darüber hinaus umfasst das Befestigungssystem 26 in der gezeigten Ausführungsform zwei Verschnürungen 42, mit denen der Gewebeabschnitt 24 am zweiten Ende 30 mit den Leitungen 16 verbunden ist. Generell können Drähte als Verschnürungen 42 vorgesehen sein. Alternativ oder ergänzend kann ein Klebeband wie ein Glasfaserfilamentklebeband und/oder ein Spannband verwendet werden, um den Gewebeabschnitt 24 im Bereich des zweiten Endes 30 mit den Leitungen 16 zu verbinden.

Der flexible Gewebeabschnitt 24 wird hierzu im Bereich des zweiten Endes 30 über die Verschnürung 42 auf die Leitungen 16 gedrückt, sodass diese im Wesentlichen gasdicht abgeschnürt sind. Darüber hinaus kann ein Dichtungsmaterial 44 vorgesehen sein, welches zwischen den einzelnen Leitungen 16 sowie zwischen einer Innenseite 46 des Gewebeabschnitts 24 und den Außenseiten der Leitungen 16 zumindest im Bereich des zweiten Endes 30 vorgesehen ist.

Das Dichtungsmaterial 44 schließt vorhandene Hohlräume zwischen den einzelnen Leitungen 16 sowie zwischen den Außenseiten der Leitungen 16 und der Innenseite 46 des Gewebeabschnitts 24, wodurch verhindert wird, dass toxische Gase und/oder Feuer vom entsprechenden Raum 20, 22 in die Brandschutzbaugruppe 10 eintreten kann.

Des Weiteren geht aus der Figur 1 hervor, dass die Brandschutzbaugruppe 10 ein intumeszierendes Material 48 aufweist, das direkt am Gewebeabschnitt 24 angeordnet ist, nämlich im Bereich des ersten, wandnahen Endes 28, in dem auch das Befestigungselement 32 angeordnet ist. Dieser Bereich wird auch als Wandbefestigungsbereich 50 bezeichnet, da er direkt an die Wand 14 angrenzt.

Das intumeszierende Material 48 ist innenliegend an der Innenseite 46 des Gewebeabschnitts 24 angeordnet und wird über den Abstützungsabschnitt 38 des Befestigungselements 32 gehalten, das an der Wand 14 befestigt ist. Die Abkantung 40 des Abstützungsabschnitts 38 des Befestigungselements 32 stellt zudem sicher, dass das intumeszierende Material 48 an der vorgesehenen Position relativ zur Wand 14 verbleibt, da es das intumeszierende Material 48 zumindest teilweise umgreift und gegen die Wand 14 vorspannt.

Der mit dem intumeszierenden Material 48 verbundene Gewebeabschnitt 24 wird hierdurch über das Befestigungselement 32 entsprechend fixiert.

Der Gewebeabschnitt 24 ist generell flexibel und gasdicht ausgebildet, wobei der Gewerbeabschnitt hierzu ein Gewebematerial aufweist, das Aluminium, Aramid, Glasfaser, Silicafaser und/oder Keramikfasern umfasst, die die benötigte Temperaturbeständigkeit aufweisen. Des Weiteren kann das Gewebematerial des Gewebeabschnitts 24 mit einem Polyurethan, Silikon, einem PTFE oder einem ähnlichen Material beschichtet sein, wodurch die Gasdichtigkeit des Gewebeabschnitts bereitgestellt wird.

Zudem kann das Gewebematerial des Gewebeabschnitts 24 mit dem intumeszierenden Material 48 und/oder einem zusätzlichen intumeszierenden Material beschichtet sein, das an der Innenseite 46 des Gewebeabschnitts 24 vorgesehen ist.

Aus der Figur 1 geht ferner hervor, dass zwischen den Leitungen 16 und dem Gewebeabschnitt 24 ein Freiraum vorhanden ist, wodurch sichergestellt ist, dass die Leitungen 16 sich innerhalb der Brandschutzbaugruppe 10 relativ frei bewegen können.

Die in der Wand 14 vorgesehene Öffnung 18 ist nicht mit einem Brandschutzmaterial oder Ähnlichem aufgefüllt worden, wie dies im Stand der Technik üblich ist. Dementsprechend ist es ohne großen Aufwand möglich, eine zusätzliche Leitung zu den bereits vorhandenen Leitungen 16 hinzuzufügen, die durch die Wand 14 geführt werden soll.

Der Gewebeabschnitt 24 ist insbesondere aus einem mattenförmigen Material gebildet worden, das zu einem Schlauch geformt worden ist, wie bereits aus der Schnittdarstellung der Figur 1 hervorgeht.

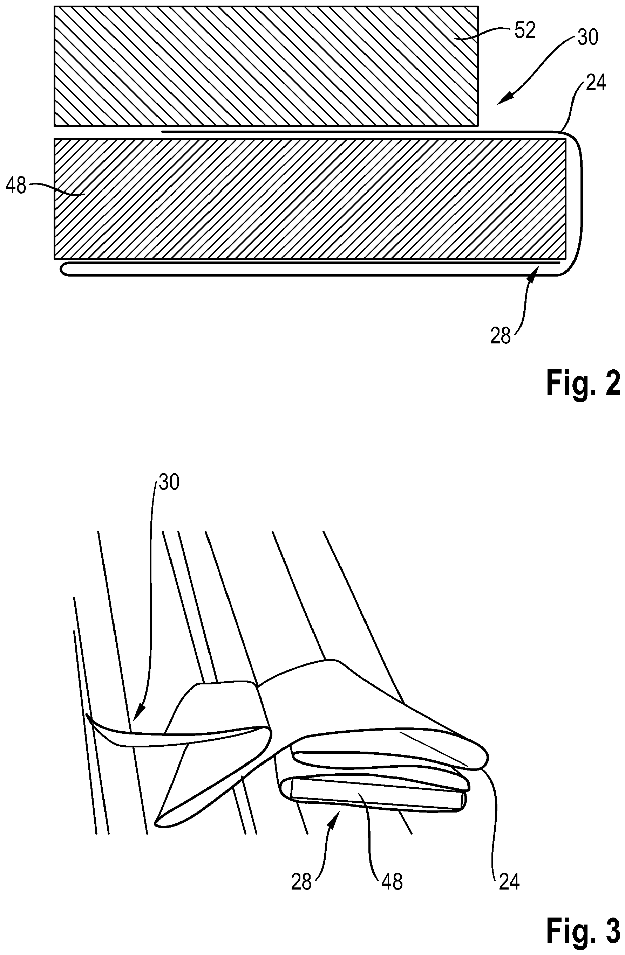

Der Gewebeabschnitt 24 wird dabei von einer Rolle abgerollt und entsprechend zugeschnitten bzw. abgelängt. Die Herstellung der in Figur 1 gezeigten Brandschutzbaugruppe 10 wird nachfolgend anhand der Figuren 2 bis 6 erläutert.

Generell geht aus der Figur 1 noch hervor, dass eine Leitungsdurchführung 12 vorzugsweise zwei Brandschutzbaugruppen 10 umfasst, die auf beiden Seiten der Wand 14 vorgesehen sind. Die Leitungsdurchführung 12 ist somit spiegelsymmetrisch hinsichtlich der Wand 14 ausgebildet.

In Figur 2 ist eine Ausführungsform eines aufgerollten Gewebeabschnitts 24 in einer Schnittdarstellung gezeigt, der mit dem intumeszierenden Material 48 sowie einem optionalen Schaumstoff 52 versehen ist. Der am Gewebeabschnitt 24 vorgesehene Schaumstoff 52 und das intumeszierende Material 48 sind jeweils wie der Gewebeabschnitt 24 mattenförmig ausgebildet.

Der Gewebeabschnitt 24, an dem das intumeszierende Material 48 und der Schaumstoff 52 angeordnet sind, wird von einer Rolle abgerollt, sodass dieser mit dem Befestigungssystem 26 zusammen die Brandschutzbaugruppe 10 ausbildet, wie dies in Figur 1 dargestellt ist. Bei dem in Figur 2 dargestellten Gewebeabschnitt 24 ist lediglich zusätzlich am zweiten Ende 30 der optionale Schaumstoff 52 vorgesehen, um eine verbesserte Abdichtung im Bereich des zweiten Endes 30 sicherzustellen.

In den Figuren 3 bis 6 sind verschiedene Herstellungsschritte gezeigt, um die Brandschutzbaugruppe 10 sowie die Leitungsdurchführung 12 auszubilden.

In Figur 3 ist der Gewebeabschnitt 24 mit dem intumeszierenden Material 48 von einer Rolle bereits abgerollt worden und auf die entsprechende Länge geschnitten worden.

Wie aus der Figur 3 hervorgeht, liegt der Gewebeabschnitt 24 in einem gefalteten Zustand vor, sodass dieser in kompakter Weise transportiert und in einfacher Weise auf die gewünschte Maße geschnitten werden kann.

Der in Figur 3 gezeigte Gewebeabschnitt 24 entspricht im Wesentlichen demjenigen aus Figur 1, da am zweiten Ende 30 kein Schaumstoff vorhanden ist.

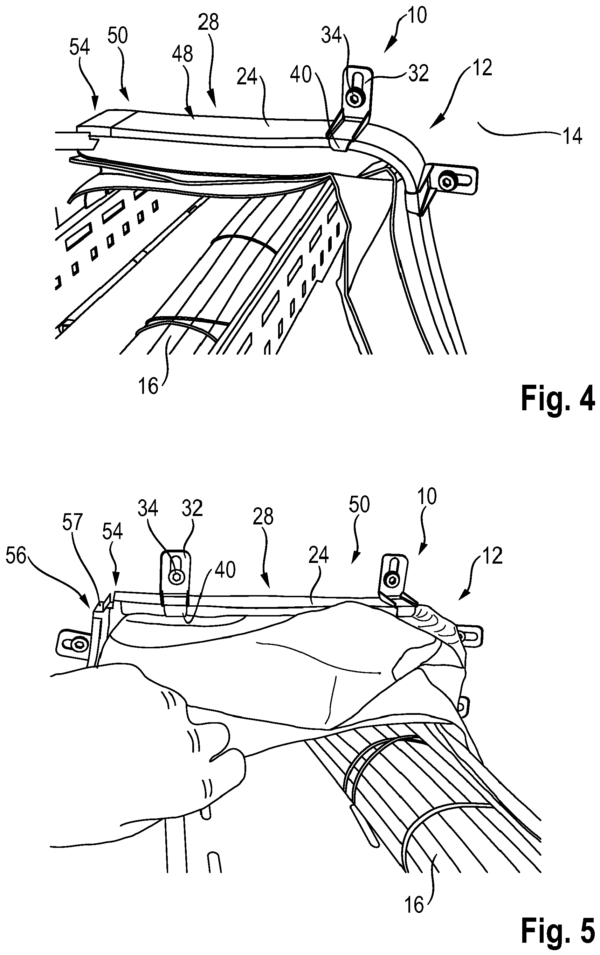

In der in Figur 4 gezeigten Darstellung ist der Gewebeabschnitt 24 mit dem daran angeordneten intumeszierenden Material 48 bereits über das Befestigungssystem 26, insbesondere die Befestigungselemente 32 und die Fixierungsmittel 34, an der Wand 14 befestigt worden. Die Befestigungselemente 32 greifen dabei am Wandbefestigungsbereich 50 des Gewebeabschnitts 24 an, der durch die Abkantung 40 der Befestigungselemente 32 definiert ist.

In diesem Wandbefestigungsbereich 50 ist zudem das intumeszierende Material 48 auf der Innenseite 46 des Gewebeabschnitts 24 angeordnet, wie aus der Figur 1 hervorgeht.

Der Gewebeabschnitt 24 wird somit im Wandbefestigungsbereich 50 über die Befestigungselemente 32 an der Wand 14 um die Öffnung 18 in der Wand 14 herum befestigt, um zunächst im Wandbefestigungsbereich 50 einen Schlauchabschnitt bereitstellen zu können.

Hierzu werden die beim Ablängen des Gewebeabschnitts 24 entstandenen Randabschnitte 54, 56, von denen in der Figur 4 lediglich der erste Randabschnitt 54 gezeigt ist, miteinander verbunden, wodurch der Schlauch im Wandbefestigungsbereich 50 ausgebildet ist. Dies kann über ein Verschlusssystem 57 erfolgen, das zwei Verschlusselemente umfasst, die an den jeweiligen Randabschnitten 54, 56 angeordnet werden (siehe Figur 5). Die beiden Verschlusselemente können ineinander verhakt werden, um so einen sicheren mechanischen Verschluss im Wandbefestigungsbereich 50 zu gewährleisten.

Nachdem die Randabschnitte 54, 56 im Wandbefestigungsbereich 50 miteinander befestigt worden sind, liegt der Gewebeabschnitt 24 im gefalteten Zustand als ringförmige Einheit vor, die die Öffnung 18 umgibt.

Um aus dieser ringförmigen Einheit den gesamten schlauchförmigen Gewebeabschnitt 24 auszubilden, der in Figur 1 gezeigt ist, werden die einzelnen Falten langgezogen bzw. der Gewebeabschnitt 24 aus dem gefalteten Zustand gezogen, wie dies in Figur 5 gezeigt ist.

Aus der Figur 5 ist auch erkennbar, wie die beiden Randabschnitte 54, 56 im Wandbefestigungsbereich 50 bereits miteinander verbunden und mechanisch geschlossen sind.

Nachdem der Gewebeabschnitt 24 aus dem gefalteten Zustand vollständig entfaltet worden ist, werden die beiden Randabschnitte 54, 56 über ihre gesamte Länge miteinander verbunden. Hierbei können die Randabschnitte 54, 56 umsäumt und anschließend fixiert werden, beispielsweise über mechanische Fixierungsmittel wie Metallklammern. Alternativ oder ergänzend kann eine chemische Verbindung der Randabschnitte 54, 56 vorgesehen sein, also eine Verklebung.

Abschließend wird der entfaltete Gewebeabschnitt 24 im Bereich des zweiten, von der Wand 14 entfernten Endes 30 mit den Leitungen 16 verbunden. Dies kann, wie anhand der Figur 1 bereits erläutert, über Verschnürungen 42 oder anderen mechanischen Verbindungselementen erfolgen. Alternativ oder ergänzend kann eine chemische Verbindung vorgesehen sein, beispielsweise über ein Dichtungsmaterial.

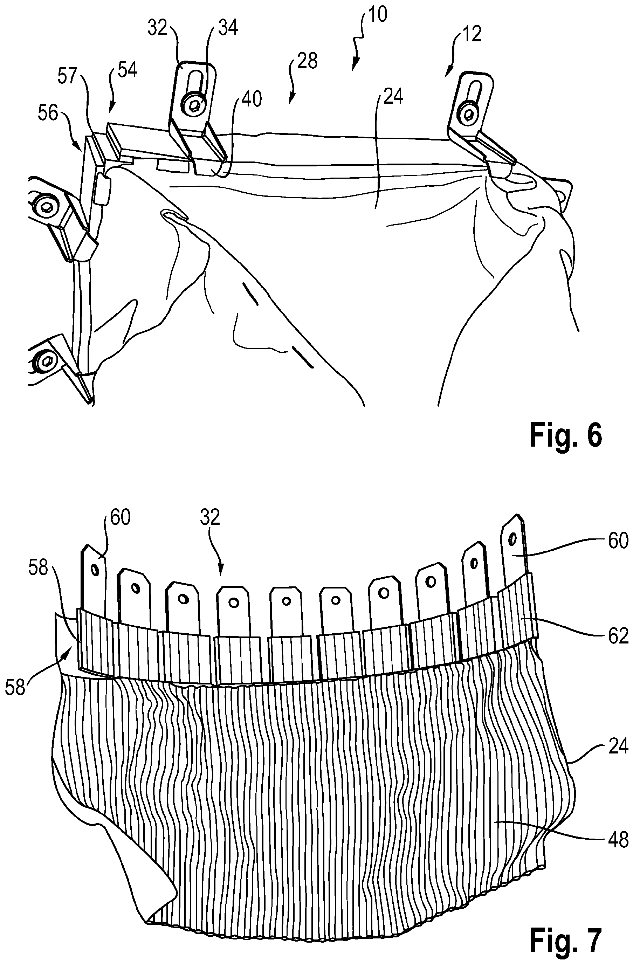

In Figur 7 ist eine alternative Ausführungsform gezeigt, bei der das Befestigungssystem 26 ein Befestigungselement 32 in Form eines umlaufenden Bands 58 mit daran angeordneten Befestigungslaschen 60 aufweist, über die das Befestigungselement 32 an der Wand 14 befestigt werden kann.

Zudem ist in Figur 7 gezeigt, dass auch am Befestigungselement 32 auf dessen Innenseite intumeszierendes Material 62 vorgesehen ist, welches streifenförmig in Längsrichtung angeordnet ist.

Das intumeszierende Material 48, welches am Gewebeabschnitt 24 angeordnet ist, liegt ebenfalls in Längsstreifen vor.

Die Längsstreifen erstrecken sich in Längsrichtung des Gewebeabschnitts 24 im Bereich des Wandbefestigungsbereichs 50. Die Längsstreifen des intumeszierenden Materials 48 können sich alternativ auch über die gesamte Länge des Gewebeabschnitts 24 erstrecken.

In jedem Fall ist sichergestellt, dass sich das intumeszierende Material 48, 62 im Brandfall ausdehnt und so die Öffnung 18 in der Wand 14 geschlossen wird, wodurch ein Übertritt von toxischen Gasen und/oder Feuer verhindert wird.

Das umlaufende Band 58 ist auf der Innenseite 58 des Gewebeabschnitts 24 befestigt, beispielsweise aufgeklebt.

Anstatt der in Figur 1 gezeigten Verschnürungen 42 und dem Dichtungsmaterial 44 kann auch ein sogenanntes Kompriband 64 vorgesehen sein, um die Leitungen 16 im Bereich des zweiten Endes 30 abzudichten, wenn sich die Brandschutzbaugruppe 10 im montierten Zustand befindet. Das Kompriband 64 ist dabei im Bereich des zweiten Endes 30 mit dem Gewebeabschnitt 24 gekoppelt.

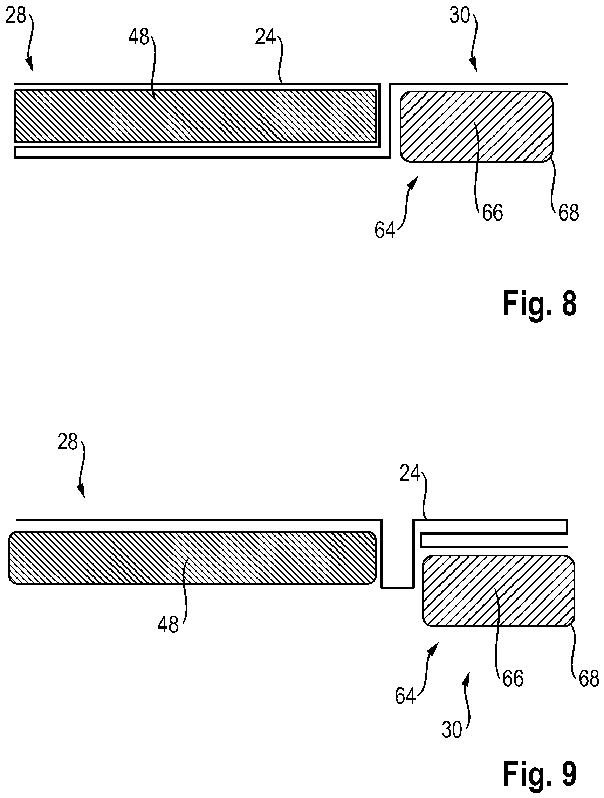

Zwei Ausführungsarten eines derartigen Gewebeabschnitts 24 sind in den Figuren 8 und 9 jeweils in einer Schnittdarstellung gezeigt, wobei der Gewebeabschnitt 24 unterschiedlich gefaltet ist.

Das Kompriband 64 umfasst einen Schaumstoff 66, der von einer Folie 68 umschlossen ist, wobei die Folie 68 bei einer vorbestimmten Bedingung reißt, sodass sich der komprimierte Schaumstoff 66 entfaltet. Hierbei stellt der expandierte Schaumstoff 66 die erforderliche Gasdichtigkeit im Bereich des zweiten Endes 30 der Brandschutzbaugruppe 10 bzw. der Leitungsdurchführung 12 bereit. Bei der vorbestimmten Bedingung kann es sich beispielsweise um eine Temperatur handeln, die in einem Brandfall erreicht wird. Alternativ, kann die Folie nach der Montage auch manuell geöffnet bzw. aufgerissen werden.

Es sind somit eine Brandschutzbaugruppe 10 sowie ein Verfahren zur Herstellung einer brandgeschützten Leitungsdurchführung 12 bereitgestellt, die in einfacher Weise die erforderlichen Brandschutzeigenschaften gewährleisten, wobei dennoch eine hohe Flexibilität bei der Herstellung der Leitungsdurchführung 12 sowie der nachträglichen Hinzufügung von Leitungen 16 vorhanden ist.

## Patentansprüche

1. Brandschutzbaugruppe (10) für eine Leitungsdurchführung (12) durch eine Wand (14), mit wenigstens einem Befestigungselement (32), über das die Brandschutzbaugruppe (10) an der Wand (14) befestigbar ist, und einem flexiblen und gasdichten Gewebeabschnitt (24), an dem intumeszierendes Material (48) vorgesehen ist, wobei der Gewebeabschnitt (24) im montierten Zustand einen Schlauch bildet, der die durch die Wand (14) geführte Leitung (16) umschließen kann, und wobei das wenigstens eine Befestigungselement (32) mit einer Außenseite (39) des Gewebeabschnitts (24) direkt gekoppelt ist und an der Innenseite (46) des Gewebeabschnitts (24) das intumeszierende Material (48) vorgesehen ist.

2. Brandschutzbaugruppe (10) nach Anspruch 1, **dadurch gekennzeichnet, dass** der Gewebeabschnitt (24) eine Matte ist, deren entgegengesetzte Randabschnitte (54, 56) zur Bildung des Schlauchs übereinandergelegt und aneinander befestigt sind.

3. Brandschutzbaugruppe (10) nach Anspruch 1 oder 2, **dadurch gekennzeichnet, dass** das wenigstens eine Befestigungselement (32) ein insbesondere umlaufendes Band (58) mit daran angeordneten Befestigungslaschen (60) oder ein Befestigungshaken ist, insbesondere wobei an dem Band (58) auf dessen Innenseite intumeszierendes Material (62) aufgebracht ist.

4. Brandschutzbaugruppe (10) nach einem der vorhergehenden Ansprüche, **dadurch gekennzeichnet, dass** das Befestigungselement (32) und/oder das intumeszierende Material (48) an einem ersten, wandseitigen Ende (28) des Gewebeabschnitts (24) angeordnet sind bzw. ist.

5. Brandschutzbaugruppe (10) nach einem der vorhergehenden Ansprüche, **dadurch gekennzeichnet, dass** an einem zweiten, von der Wand (14) entfernten Ende (30) des Gewebeabschnitts (24) ein Kompriband (64) vorgesehen ist, über das der Gewebeabschnitt (24) zur Leitung (16) abgedichtet ist.

6. Brandschutzbaugruppe (10) nach einem der vorhergehenden Ansprüche, **dadurch gekennzeichnet, dass** der Gewebeabschnitt (24) ein Gewebematerial aufweist, das Aluminium, Aramid, Glasfaser, Silicafaser und/oder Keramikfaser umfasst, insbesondere wobei das Gewebematerial mit dem intumeszierenden Material (48) zumindest teilweise beschichtet ist.

7. Brandschutzbaugruppe (10) nach einem der vorhergehenden Ansprüche, **dadurch gekennzeichnet, dass** das intumeszierende Material (48) in parallel zueinander verlaufenden Streifen angeordnet ist, die sich über die gesamte Innenseite (46) eines Wandbefestigungsbereichs (50) des Gewebeabschnitts (24) erstrecken und vorzugsweise in Längsrichtung der Brandschutzbaugruppe (10) verlaufen.

8. Verfahren zur Herstellung einer brandgeschützten Leitungsdurchführung (12) durch eine Wand (14), insbesondere mit einer Brandschutzbaugruppe (10) nach einem der vorhergehenden Ansprüche, mit den folgenden Schritten:
a) Bereitstellen eines mattenförmigen Gewebeabschnitts (24), der auf seiner Innenseite (46) ein intumeszierendes Material (48) aufweist,
b) Bereitstellen eines Befestigungssystems (26),
c) Ablängen des Gewebeabschnitts (24) unter Bildung zwei entgegengesetzter Randabschnitte (54, 56),
d) Befestigen des Gewebeabschnitts (24) mittels des Befestigungssystems (26) an einem Randbereich einer Öffnung (18) in einer Wand (14), wobei das Befestigungssystem (26) an der Außenseite (39) eines Wandbefestigungsbereichs (50) des Gewebeabschnitts (24) angreift,
e) Bilden eines Schlauchs aus dem Gewebeabschnitt (24) durch Aneinanderlegen und Verbinden der entgegengesetzten Randabschnitte (54, 56).

9. Verfahren nach Anspruch 8, **dadurch gekennzeichnet, dass** die Randabschnitte (54, 56) miteinander verbunden werden, indem diese zunächst umsäumt und anschließend fixiert werden.

10. Verfahren nach Anspruch 9, **dadurch gekennzeichnet, dass** die umsäumten Randabschnitte über mechanische Fixierungselemente oder eine chemische Verbindung fixiert werden, insbesondere miteinander verklebt werden.

11. Verfahren nach einem der Ansprüche 8 bis 10, **dadurch gekennzeichnet, dass** zunächst nur die Randabschnitte (54, 56) im Wandbefestigungsbereich (50) aneinander befestigt werden.

12. Verfahren nach einem der Ansprüche 8 bis 11, **dadurch gekennzeichnet, dass** der Gewebeabschnitt (24) im gefalteten Zustand vorliegt, insbesondere wobei der Gewebeabschnitt (24) entfaltet wird, nachdem zumindest die Randabschnitte (54, 56) im Wandbefestigungsbereich (50) aneinander befestigt worden sind.

13. Verfahren nach einem der Ansprüche 8 bis 12, **dadurch gekennzeichnet, dass** zumindest der Gewebeabschnitt (24) zunächst von einer Rolle abgerollt wird.

14. Verfahren nach einem der Ansprüche 8 bis 13, **dadurch gekennzeichnet, dass** der Gewebeabschnitt (24) mit der Leitung (16) verbunden wird, insbesondere über eine Verschnürung (42) wie einen Draht, ein Klebeband wie ein Glasfaserfilamentklebeband oder ein Spannband.

15. Verfahren nach einem der Ansprüche 8 bis 14, **dadurch gekennzeichnet, dass** zunächst eine Öffnung (18) in die Wand (14) eingebracht wird, durch die die Leitung (16) geführt werden soll, wobei die Öffnung (18) materialfrei bleibt.
